# DEMANDE DE BREVET EUROPEEN

(11) **EP 4 016 856 A1**
(43) Date de publication de la demande: **22.06.2022**
(21) Numéro de dépôt: 21212332.7
(22) Date de dépôt: 03.12.2021
(51) Int. Cl.: H04B 5/00

(54) **PROCÉDÉ DE RETRO-MODULATION D'UNE COMMUNICATION SANS CONTACT, ET TRANSPONDEUR CORRESPONDANT**

(30) Priorité: 17.12.2020 FR 2013523
(71) Demandeur: STMICROELECTRONICS SA, 92120 Montrouge (FR)
(72) Inventeur: GOULIER, Julien, 38000 GRENOBLE (FR)
(74) Mandataire: Casalonga

(57) **Abrégé**

Le procédé de communication sans contact comprend une retro-modulation d'un signal porteur (AC0, AC1) reçu aux bornes d'une antenne (Lc) dans une alternance d'états modulés et d'états non-modulés. L'état modulé comprend une modulation d'une charge (LDMOD) aux bornes de l'antenne (Lc) à une impédance nulle, et les transitions de l'état modulé à l'état non-modulé sont commandées à un instant déterminé par un premier retard (t1).

## Description

Des modes de mise en œuvre et de réalisation concernent les communications sans contact, en particulier les communications sans contact utilisant une rétro-modulation d'amplitude d'un signal porteur.

Les communications sans contact, telles que les communications selon la technologie nommée « communication en champ proche », usuellement « NFC » pour « Near Field Communication » en anglais, et selon la technologie nommée « identification radio-fréquence », usuellement « RFID » pour « Radio Frequency IDentification » en anglais, sont des technologies de connectivité sans fil qui permettent une communication sur une courte distance, par exemple 10 cm, entre des dispositifs électroniques, comme par exemple entre des cartes à puce sans contact ou des étiquettes et des lecteurs.

La technologie NFC est une plate-forme technologique ouverte, normalisée dans les normes ISO-14443, EMVCo, NFC-forum mais incorporent d'autres normes de communication compatibles déjà existantes. La technologie RFID est notamment normalisée par la norme ISO-18092 et incorpore également d'autres normes de communication compatibles déjà existantes.

Des communications sans contact peuvent être mises en œuvre entre deux dispositifs de communication sans contact de pair à pair (en particulier des dispositifs compatibles avec la technologie NFC), tels que des téléphones multifonction (usuellement désigné par l'anglicisme « smartphone ») ; ou bien entre un dispositif lecteur et un dispositif transpondeur, tel qu'une carte ou étiquette NFC ou RFID ou un téléphone multifonction émulé en mode carte.

Lors d'une transmission d'information entre un lecteur et un transpondeur, le lecteur génère un champ magnétique avec une antenne qui est typiquement une onde sinusoïdale (appelée la porteuse, ou le signal porteur) à 13,56MHz.

Pour transmettre des informations depuis le lecteur vers le transpondeur, le lecteur utilise une modulation d'amplitude de la porteuse et le transpondeur est capable de démoduler la porteuse reçue afin d'obtenir les données transmises par le lecteur.

Pour une transmission d'informations du transpondeur vers le lecteur, le lecteur génère le champ magnétique (la porteuse) sans modulation. Le transpondeur module alors le champ généré par le lecteur, en fonction des informations à transmettre. La fréquence de cette modulation correspond à une sous-porteuse de ladite porteuse. La fréquence de cette sous porteuse dépend du protocole de communication utilisé et peut être par exemple égale à 848 kHz.

La modulation est effectuée en modifiant la charge connectée aux bornes de l'antenne du transpondeur.

Deux modes de fonctionnement sont alors possibles, un mode passif ou un mode actif.

Dans le mode de fonctionnement actif, le lecteur et le transpondeur actif génèrent tous les deux un champ électromagnétique. Généralement, ce mode de fonctionnement est utilisé lorsque le transpondeur actif est pourvu d'une source d'alimentation propre, par exemple une batterie.

Un transpondeur passif est en particulier dépourvu d'alimentation et utilise l'énergie transmise par l'onde porteuse issue du lecteur pour alimenter son circuit intégré.

Dans le mode passif, le transpondeur rétro-module l'onde issue du lecteur pour transmettre des informations et n'intègre pas, pour la transmission des informations, de moyens d'émission proprement dits, capable par exemple de générer son propre champ magnétique lors de l'émission.

Le transpondeur passif modifie l'impédance connectée à son antenne pour communiquer des trames de données, par une rétro-modulation visible du côté du lecteur par couplage inductif.

Pendant une transmission de trame, la retro-modulation est définie soit dans un état non-modulé lorsque la charge de rétro-modulation n'est pas connectée à l'antenne, soit dans un état modulé lorsque la charge de retro-modulation est connectée à l'antenne du transpondeur.

Plus la variation d'impédance (i.e. la différence de charge entre l'état modulé et l'état non-modulé) générée par le transpondeur est grande, plus elle est visible du côté du lecteur et il est donc plus facile pour le lecteur de démoduler les données. L'un des principaux critères de performance pour un transpondeur est l'amplitude de modulation de charge « LMA », pour « Load Modulation Amplitude » en anglais. Une méthode de mesure de LMA est de mesurer la différence d'amplitude du courant dans l'antenne Lc du transpondeur CRD entre l'état modulé et l'état non modulé.

Une difficulté rencontrée dans la conception de transpondeur sans contact est d'optimiser la LMA tout en conservant une trame cohérente, c'est-à-dire synchronisée avec le signal porteur du lecteur, quelles que soient les conditions du champ électromagnétique (en particulier la distance séparant le lecteur et le transpondeur).

Dans les transpondeurs sans contact classiques, la modulation de la charge est conçue de manière à ce que le signal porteur soit disponible sur l'antenne du transpondeur pendant les deux états modulé et non-modulé. Cela permet de maintenir en activité une extraction d'horloge à partir de la porteuse, et de cadencer la transmission sur les cycles d'horloge du signal extrait en tant qu'unique référence temporelle, en particulier pour définir les instants de transition entre l'état non-modulé et l'état modulé.

Ces solutions classiques présentent l'inconvénient d'interdire par principe une impédance nulle ou trop faible aux bornes de l'antenne, par nécessité de l'extraction du signal horloge. Les solutions classiques prévoient en conséquence d'ajuster la valeur de l'impédance à l'état modulé en fonction du niveau effectif du champ électromagnétique, ce qui complexifie la conception de la rétro-modulation et limite l'amplitude de modulation de charge LMA.

Il existe un besoin d'augmenter l'amplitude de modulation de charge LMA des transpondeurs sans contact, en particulier les transpondeurs sans contact passifs.

Selon un aspect il est proposé un procédé de communication sans contact comprenant une retro-modulation d'un signal porteur reçu aux bornes d'une antenne dans une alternance d'états modulés et d'états non-modulés. Selon une caractéristique générale de cet aspect, l'état non-modulé comprend une modulation à une impédance non-nulle d'une charge aux bornes de l'antenne, l'état modulé comprend une modulation à une impédance nulle ou quasi-nulle de la charge aux bornes de l'antenne, et les transitions de l'état modulé à l'état non-modulé sont commandées à un instant déterminé par un premier retard.

Par « impédance nulle ou quasi-nulle », on entend une impédance aussi faible que possible compte tenu des contraintes matérielles pour la mettre en œuvre, par exemple on considère qu'un transistor à l'état passant présente une impédance nulle ou quasi-nulle à ses bornes de conductions. Par exemple et en particulier, par « impédance quasi-nulle » on entend une impédance valant au maximum quelques centièmes, par exemple 2%, de la valeur de l'impédance non-nulle de l'état non-modulé.

En d'autres termes, il est proposé une rétro-modulation complète à impédance nulle dans l'état modulé avec une utilisation d'un retard pour maintenir une synchronisation précise de la transmission de trame. Le premier retard est ainsi utilisé pour définir le temps de l'état modulé, puisqu'un signal d'horloge ne peut pas être extrait du signal porteur modulé avec une impédance nulle.

En conséquence l'amplitude de modulation de charge LMA est maximisée (en toute rigueur, la composante à l'état modulé de la LMA est optimisée), ce qui permet notamment d'augmenter la portée de la communication sans contact.

Selon un mode de mise en œuvre, les transitions de l'état non-modulé à l'état modulé sont commandées à un instant déterminé par une durée mesurée sur des cycles d'horloges issus d'un signal d'horloge extrait du signal porteur, la mesure de la durée commençant à partir d'un instant déterminé par un deuxième retard, l'instant déterminé par le deuxième retard étant ultérieur à l'instant de la transition à l'état non-modulé.

En d'autres termes, un deuxième retard permet d'éviter d'utiliser le signal d'horloge extrait lors du redémarrage de l'extraction d'horloge au début de l'état modulé, permettant d'éviter des instabilités dans le signal d'horloge extrait lorsque sa génération redémarre.

Cela permet notamment que la synchronisation de la transmission soit très précisément définie dans le temps, et par ailleurs d'une façon qui peut s'adapter à différentes conditions.

Selon un mode de mise en œuvre, la mesure du deuxième retard et la mesure du premier retard commencent à des instants coordonnés avec un signal de commande de modulation initiant la commande de la transition à l'état modulé, le deuxième retard étant plus grand que le premier retard.

Par exemple, le signal de commande de modulation est à l'origine de la commande de l'état modulé, et peut typiquement être généré par des moyens de commande numérique. Les commencements des mesures du premier retard et du deuxième retard sont commandés à partir du signal de commande de modulation, et sont par exemple décalées entre eux d'un demi cycle d'horloge afin de garantir un fonctionnement robuste du système.

La différence entre le deuxième retard et le premier retard est avantageusement prévue pour être juste suffisamment longue pour garantir que l'extraction du signal d'horloge a redémarré et est stabilisée lorsque la mesure sur les cycles d'horloges commence.

Selon un mode de mise en œuvre, un signal de masquage bloquant le signal d'horloge extrait à un niveau de référence constant, est généré pendant la durée du deuxième retard.

Selon un mode de mise en œuvre, le deuxième retard est obtenu par un temps de charge d'un deuxième élément capacitif avec un deuxième courant de référence.

Selon un mode de mise en œuvre, la modulation de charge aux bornes de l'antenne à une impédance nulle ou quasi-nulle de l'état modulé est commandée par un signal de rétro-modulation généré pendant une durée déterminée par le premier retard.

Selon un mode de mise en œuvre, le premier retard est obtenu par un temps de charge d'un premier élément capacitif avec un premier courant de référence.

Selon un autre aspect il est proposé un transpondeur de communication sans contact, tel que par exemple une étiquette, comprenant une antenne destinée à recevoir un signal porteur, et des moyens de modulation configurés pour rétro-moduler le signal porteur dans une alternance d'états modulés et d'états non-modulés. Selon une caractéristique générale de cet aspect, les moyens de modulation comprennent un premier circuit de retard configuré pour générer un premier retard, et sont configurés pour moduler une charge aux bornes de l'antenne à une impédance non-nulle dans l'état non-modulé, pour moduler la charge aux bornes de l'antenne à une impédance nulle ou quasi-nulle dans l'état modulé, et pour commander les transitions de l'état modulé à l'état non-modulé à un instant déterminé par le premier retard.

Selon un mode de réalisation, le transpondeur comporte en outre un circuit d'extraction d'horloge configuré pour générer un signal d'horloge extrait du signal porteur, et les moyens de modulation comprennent un deuxième circuit de retard configuré pour générer un deuxième retard et un circuit de commande configuré pour mesurer une durée sur des cycles d'horloges issus du signal d'horloge extrait à partir d'un instant déterminé par le deuxième retard, l'instant déterminé par le deuxième retard étant ultérieur à l'instant de la transition à l'état non-modulé, et pour générer un signal de commande de modulation commandant les transitions de l'état non-modulé à l'état modulé à un instant déterminé par la durée mesurée.

Selon un mode de réalisation, le premier circuit de retard et le deuxième circuit de retard sont configurés pour commencer la mesure du premier retard et la mesure du deuxième retard à des instants coordonnés avec un signal de commande de modulation généré des moyens de commande numérique pour initier la commande de la transition à l'état modulé, le deuxième retard étant plus grand que le premier retard.

Selon un mode de réalisation, le deuxième circuit de retard est configuré pour générer un signal de masquage adapté pour bloquer le signal d'horloge extrait à un niveau de référence constant, pendant la durée du deuxième retard.

Selon un mode de réalisation, le deuxième circuit de retard comporte un deuxième élément capacitif et un deuxième générateur de courant adapté pour générer un deuxième courant de référence, adaptés pour obtenir le deuxième retard par le temps de charge du deuxième élément capacitif avec le deuxième courant de référence.

Selon un mode de réalisation, le premier circuit de retard est configuré pour générer un signal de rétro-modulation adapté pour commander la modulation de la charge aux bornes de l'antenne à une impédance nulle ou quasi-nulle à l'état modulé, pendant la durée du premier retard.

Selon un mode de réalisation, le premier circuit de retard comporte un premier élément capacitif et un premier générateur de courant adapté pour générer un premier courant de référence, configurés pour obtenir le premier retard par le temps de charge du premier élément capacitif avec le premier courant de référence.

D'autres avantages et caractéristiques de l'invention apparaîtront à l'examen de la description détaillée de modes de réalisation et de mise en œuvre, nullement limitatifs, et des dessins annexés, sur lesquels :
[Fig 1]
[Fig 2]
[Fig 3]
[Fig 4]
[Fig 5]

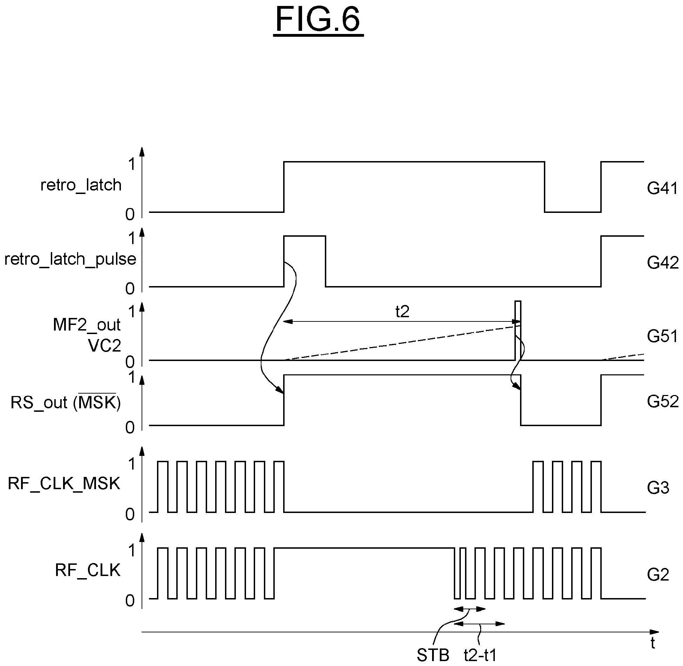

[Fig 6] illustrent des modes de réalisation et de mise en œuvre de l'invention.

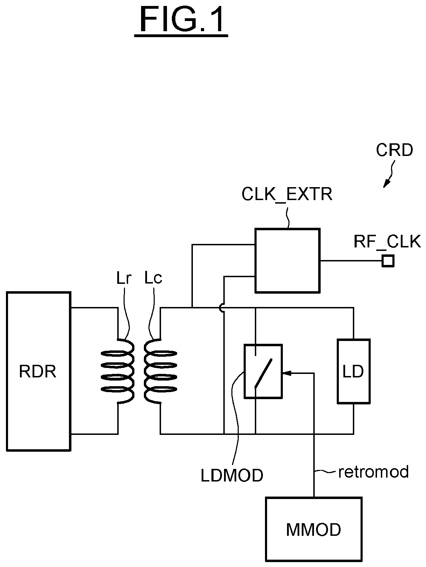

La figure 1 représente un système SYS de communication sans contact, par exemple compatible avec la technologie de communication en champ proche « NFC » ou avec la technologie d'identification radiofréquence « RFID ».

Le système SYS comporte un lecteur RDR et un transpondeur passif CRD, par exemple une carte à puce (telle qu'une carte bancaire) ou une étiquette (usuellement « tag » en anglais).

Le lecteur comporte une antenne Lr et des moyens adaptés pour générer un champ magnétique contenant le signal porteur, typiquement une onde sinusoïdale à 13,56MHz, sur l'antenne Lr.

Le transpondeur passif CRD comporte une antenne Lc destinée à être couplée inductivement avec l'antenne Lr du lecteur RDR et un circuit électronique, par exemple réalisé de façon intégré. L'impédance global du circuit électronique du transpondeur CRC sur les bornes de l'antenne Lc est représentée par une charge LD.

On entend le terme « passif » dans son sens habituel dans le domaine des communications sans contact, notamment du type NFC ou RFID, et plus particulièrement on entend que le transpondeur est passif en ce que le signal d'horloge de référence qu'il utilise pour cadencer la communication sans contact est exclusivement basé sur le signal porteur fourni par le lecteur.

Le transpondeur CRD comporte à cet égard un circuit d'extraction d'horloge CLK_EXTR configuré pour générer un signal d'horloge extrait RF_CLK du signal porteur reçu aux bornes de son antenne Lc.

Le transpondeur CRD comporte des moyens de modulation MMOD configurés pour rétro-moduler en amplitude le signal porteur dans une alternance d'états modulés et d'états non-modulés. Les moyens de modulation MMOD sont configurés pour générer un signal de rétro-modulation retromod commandant le couplage ou non d'une charge de modulation LDMOD aux bornes de l'antenne Lc.

Dans l'état non-modulé, la charge de modulation LDMOD n'est pas couplée aux bornes de l'antenne Lc et l'impédance aux bornes de l'antenne est définie par l'impédance (non-nulle) du circuit électrique du transpondeur CRD, appelée charge globale LD. Dans l'état modulé, la charge de modulation LDMOD est additionnellement couplée aux bornes de l'antenne Lc, en parallèle à la charge globale LD, et l'impédance aux bornes de l'antenne est définie principalement par l'impédance de la charge de modulation LDMOD.

La charge de modulation LDMOD a une impédance nulle et est représenté par le schéma d'un interrupteur couplé aux bornes de l'antenne Lc. Cela étant, la charge de modulation LDMOD peut être réalisée au moyen d'un transistor commandé par le signal de rétro-modulation retromod, ou éventuellement un circuit résistif ou capacitif adapté pour avoir une impédance nulle.

Par impédance nulle ou quasi-nulle, on entend une impédance négligeable par rapport à l'impédance de la charge globale LD du circuit électrique du transpondeur CRD couplé à l'antenne Lc, en particulier l'impédance considérée à la fréquence du signal porteur. Par exemple, on peut considérer que l'impédance nulle ou quasi-nulle est bornée à une valeur maximale de quelques centièmes, par exemple 2%, de l'impédance non-nulle aux bornes de l'antenne à l'état non-modulé, c'est-à-dire quelques centièmes de la charge globale LD.

La charge globale LD du circuit électronique aux bornes de l'antenne Lr inclut l'impédance du circuit d'extraction d'horloge CLK_EXTR et des moyens de modulation MMOD, ainsi que des circuits typiques tels que des moyens de gestion d'alimentation du type circuits limiteurs et rectifieurs (non représentés).

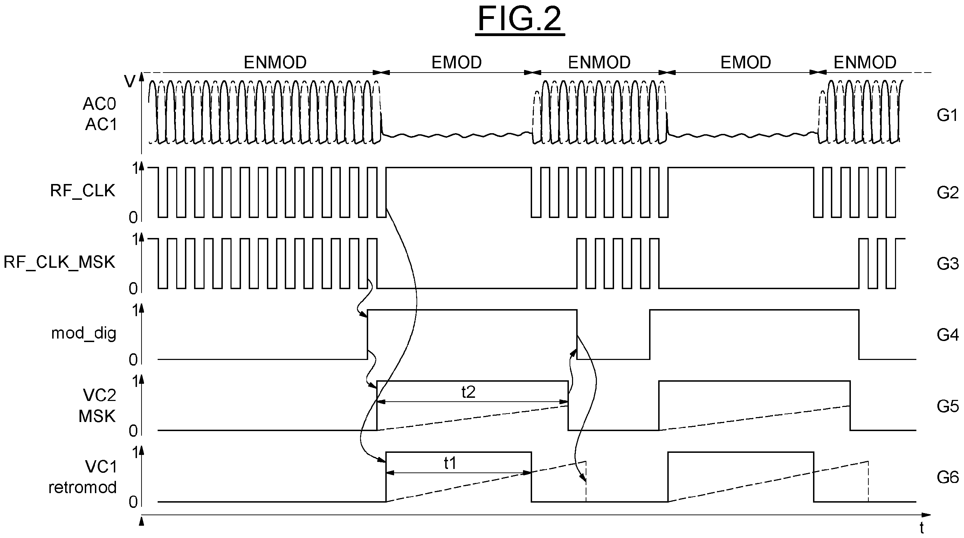

Les figures 2 à 6 illustrent un exemple de réalisation et de mise en œuvre des moyens de modulation MMOD.

La figure 2 illustre des diagrammes temporels G1-G6 des principaux signaux en jeu dans le transpondeur CRD, en particulier dans les moyens de modulation MMOD, lors d'une transmission d'une trame de données.

Le diagramme G1 représente le signal porteur sinusoïdal provenant du lecteur RDR, dans ses deux composantes AC0, AC1 sur les deux bornes de l'antenne Lc du transpondeur.

Le diagramme G2 représente le signal d'horloge RF_CLK extrait du signal porteur par le circuit d'extraction d'horloge CLK_EXTR.

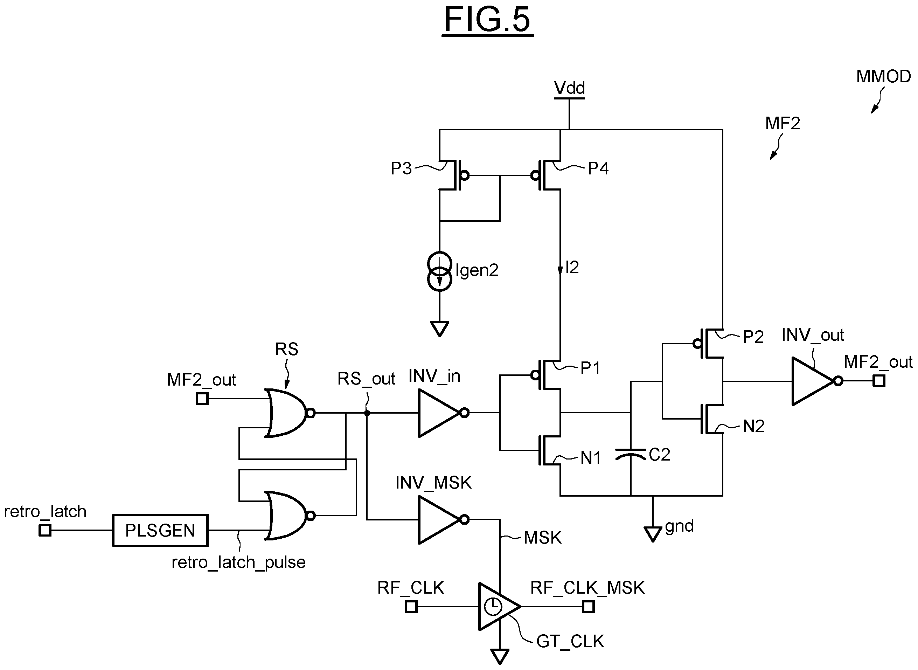

Le diagramme G3 représente un signal d'horloge masqué RF_CLK_MSK, décrit ci-après en relation avec les figures 5 et 6.

Le diagramme G4 représente un signal de commande de modulation mod_dig, à l'origine (avant resynchronisations) des commandes des transitions de l'état non-modulé ENMOD à l'état modulé EMOD.

Le diagramme G5 représente la génération d'un signal de masquage MSK (en trait continu), au moyen notamment d'un deuxième retard t2 généré par la charge VC2 d'un deuxième circuit capacitif (en trait interrompu), tel que décrit ci-après en relation avec les figures 5 et 6.

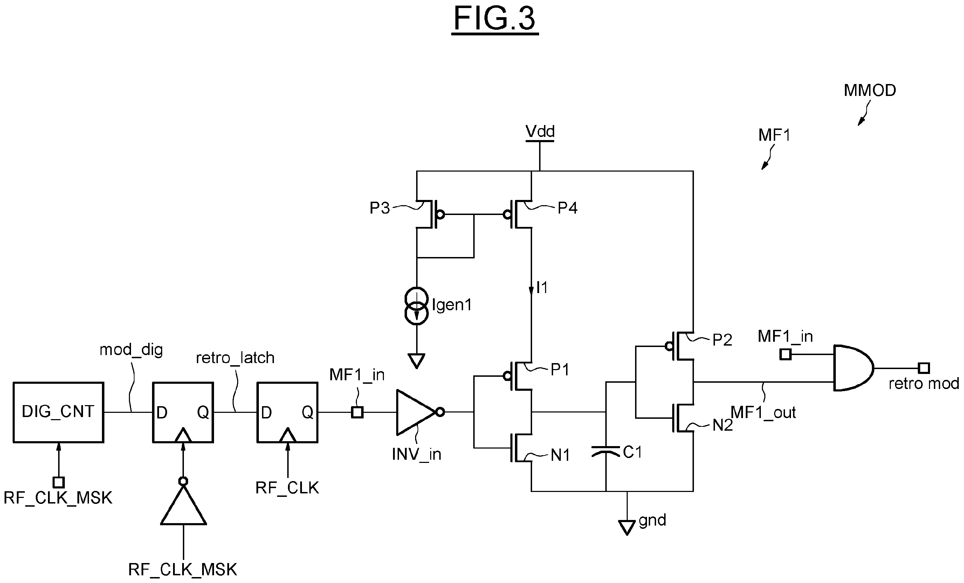

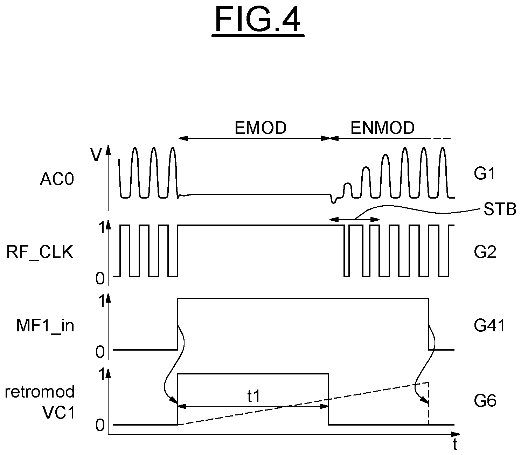

Le diagramme G6 représente la génération du signal de rétro-modulation retromod (en trait continu), au moyen d'un premier retard t1 généré par la charge VC1 d'un premier circuit capacitif (en trait interrompu), tel que décrit ci-après en relation avec les figures 3 et 4.

La transmission de la trame de donnée est faite par une salve d'états modulés EMOD et d'états non-modulés ENMOD en alternance, par exemple dans un codage du type Manchester.

Un front montant du signal de commande de modulation mod_dig commande une génération du signal de rétro-modulation retromod à un niveau haut « 1 ».

Le signal de rétro-modulation retromod au niveau haut « 1 » commande l'état modulé EMOD, c'est-à-dire commande une modulation de la charge LDMOD aux bornes de l'antenne Lc à une impédance nulle. L'amplitude du signal porteur AC0, AC1 est en conséquence réduite à une valeur sensiblement nulle lorsque le signal de rétro-modulation retromod est à « 1 », et le circuit d'extraction d'horloge CLK_EXTR n'est plus capable de détecter les périodes du signal porteur et le signal d'horloge RF _CLK reste à un niveau constant.

La durée de la génération du signal de rétro-modulation est déterminée par un premier retard t1, obtenu lorsque la charge VC1 du premier circuit capacitif MF1, C1 (figure 3) fait commuter un circuit CMOS inverseur (figure 3), i.e. dépasse la moitié du niveau haut.

La commutation du circuit CMOS inverseur commande un front descendant du signal de rétro-modulation retromod, à un niveau bas « 0 », produisant la transition de l'état modulé EMOD à l'état non-modulé ENMOD.

Dans l'état non-modulé ENMOD, la charge LDMOD aux bornes de l'antenne Lc n'est plus modulée à une impédance nulle, le signal porteur AC0, AC1 a son amplitude initiale et l'extraction du signal d'horloge RF_CLK reprend.

On se réfère à la figure 3.

La figure 3 représente un premier circuit de retard MF1 et des moyens de commande numérique DIG_CNT générant le signal de commande de modulation mod_dig, incorporés aux moyens de modulation MMOD.

Le premier circuit de retard MF1 présente dans cet exemple une architecture du type « monoflop » ou « verrou monostable », comportant un montage CMOS inverseur d'entrée P1-N1 dont la sortie arrive en entrée d'un montage CMOS inverseur de sortie P2-N2, alimentés par une tension de référence haute Vdd et une tension de référence basse gnd.

Un premier signal de commande synchronisé MF1_in, issu du signal de commande de modulation mod_dig, est fourni en entré du montage CMOS inverseur d'entrée P1-N1 par l'intermédiaire d'un inverseur INV_in.

Un élément capacitif C1 est couplé entre la sortie du premier montage CMOS inverseur P1-N1 et une borne à la tension de référence basse gnd.

Une source de courant Igen1 impose un premier courant I1, par exemple un courant maximum, dans la borne de conduction du transistor P1 de type P du montage CMOS inverseur d'entrée P1-N1, par l'intermédiaire d'un montage miroir de courant P3-P4.

En conséquence, lorsque le signal de commande MF1_in est à un niveau bas, l'élément capacitif C1 est court-circuité par transistor N1 à l'état passant, et le circuit de retard MF1 transmet directement le niveau de référence haut Vdd sur sa sortie MF1_out. Lorsque le signal de commande MF1_in est à un niveau haut, l'élément capacitif C1 est chargé par le courant I1 via le transistor P1 à l'état passant, la tension VC1 (figure 2, G6) en entrée du montage CMOS inverseur de sortie P2-N2 a une allure de pente montante et le circuit de retard MF1 transmet le niveau de référence bas gnd sur sa sortie MF1_out avec un retard d'une durée t1 prise par la tension VC1 pour atteindre la tension de seuil du transistor N2.

Une porte ET entre le signal de commande MF1_in et la sortie MF1_out du premier circuit de retard MF1 permet de générer un front descendant bien net sur le signal de modulation retromod à l'instant de commutation défini par le retard t1.

Ainsi, la durée de l'état modulé est précisément définie à un instant déterminé par le premier de retard t1 après réception de signal de commande de modulation mod_dig.

En effet, le premier signal de commande synchronisé MF1_in est issu du signal de commande de modulation mod_dig, et dans un exemple de réalisation simple, le signal de commande de modulation mod_dig pourrait commander directement l'entrée, sur l'inverseur INV_in, du circuit de retard MF1.

Cela étant, dans cet exemple de réalisation, le premier signal de commande synchronisé MF1_in est issu du signal de commande de modulation mod_dig avec en outre une synchronisation de ses transitions sur les fronts descendants du signal d'horloge masqué RF_CLK_MSK et sur les fronts montants du signal d'horloge extrait RF_CLK, au moyen de bascules D respectives.

Le signal résultant de la synchronisation du signal de commande de modulation mod_dig sur les fronts descendants du signal d'horloge masqué RF_CLK_MSK est appelé deuxième signal de commande (retro_latch), et est utilisé pour commander un deuxième circuit de retard (MF2) décrit ci-après en relation avec les figures 5 et 6.

Ainsi, le premier signal de commande MF1_in et le deuxième signal de commande retro_latch sont coordonnés, à partir du signal de commande de modulation mod_dig, de manière à être décalés entre eux. Cela permet d'assurer un fonctionnement robuste de la communication sans contact, en évitant des effet parasites dans la génération des signaux, du type désynchronisations des cycles d'horloges.

La figure 4 représente un détail des diagrammes G1, G2, et G6 de la figure 2, le diagramme G41 représente le signal de commande synchronisé MF1_in.

Ainsi, on peut voir sur la figure 4 que le front montant du signal de commande synchronisé MF1_in est synchronisé avec un front montant du signal d'horloge RF_CLK, et produit directement le front montant dans le signal retromod, par l'effet de la porte ET en sortie du premier circuit de retard MF1 (recevant ainsi les valeurs MF1_in=« 1 » et MF1_out=« 1 »).

Après la durée t1, lorsque la pente de tension VC1 aux bornes de l'élément capacitif C1 fait commuter le transistor P2, la porte ET génère le front descendant dans le signal retromod (MF1_in=« 1 » et MF1_out=« 0 »).

Le front descendant dans signal de commande MF1_in survient après le front descendant du signal de rétro-modulation retromod et fait commuter directement la sortie du premier circuit de retard MF1_out à « 1 », et la sortie de la porte ET reste à 0 (MF1_in=« 0 » et MF1_out=« 1 »).

Le front descendant dans le signal de rétro-modulation retromod marque la fin de l'état modulé EMOD, et l'instant de transition de l'état modulé à l'état non-modulé ENMOD.

En résumé, les moyens de modulation MMOD comprennent un premier circuit de retard MF1 configuré pour générer un premier retard t1 et le signal de rétro-modulation retromod. Le signal de rétro-modulation retromod commande d'une part la modulation de la charge LDMOD aux bornes de l'antenne Lc à une impédance nulle dans l'état modulé, et commande d'autre part la transition de l'état modulé EMOD à l'état non-modulé ENMOD à un instant déterminé par le premier retard t1.

Au début de l'état non-modulé ENMOD, le signal porteur AC0, AC1 aux bornes de l'antenne Lc du transpondeur, peut présenter une phase d'instabilité dans laquelle il a besoin d'un temps de stabilisation STB pour retrouver un niveau d'amplitude suffisant pour garantir une extraction correcte du signal RF_CLOCK, notamment en fonction de la nature de la charge globale RD et de la distance entre le lecteur RDR et le transpondeur CRD.

Pendant le temps de stabilisation, l'extraction du signal d'horloge RF_CLK peut être perturbée, ce qui introduit un risque d'erreur dans le cadencement basé sur le signal d'horloge extrait RF_CLK.

On se réfère à cet égard aux figure 5 et 6.

La figure 5 représente un deuxième circuit de retard MF2 incorporé aux moyens de modulation MMOD et configuré pour générer un signal de masque MSK masquant le signal d'horloge RF_CLK pendant le temps de stabilisation STB.

Comme le premier circuit de retard MF1, le deuxième circuit de retard MF2 a une architecture du type « monoflop » ou « verrou monostable ». Les éléments communs entre le premier circuit de retard MF1 et le deuxième circuit de retard MF2 supportent les mêmes références et ne seront pas tous détaillés à nouveau.

On notera néanmoins que, dans le deuxième circuit de retard MF2, le générateur de courant Igen2 génère un courant I2 différent du courant I1, et/ou que le deuxième élément capacitif C2 a une valeur capacitive différente du premier élément capacitif C1.

L'entrée du deuxième circuit de retard MF2 est située sur l'entrée de l'inverseur INV_in, et le signal de sortie MF2_out du deuxième circuit de retard MF2 est fourni par un inverseur INV_out connecté au montage CMOS inverseur de sortie P2-N2.

Le signal commandant le deuxième circuit de retard MF2, fourni en entrée de l'inverseur INV_in, provient de la sortie RS_out d'un verrou RS à porte non-OU.

L'entrée d'initialisation (« set ») du verrou RS reçoit une pulsation retro_latch_pulse générée par un générateur de pulsation PLSGEN sur front montant du signal de commande de modulation mod_dig, ou avantageusement sur front montant du deuxième signal de commande synchronisé retro_latch dans le cadre de l'exemple de réalisation décrit en relation avec les 2 à 6.

L'entrée de réinitialisation (« reset ») du verrou RS reçoit le signal de sortie MF2_out du deuxième circuit de retard MF2.

En outre, la sortie RS_out du verrou RS fournit le signal de masquage MSK par l'intermédiaire d'un inverseur INV_MSK. Le signal de masquage commande un amplificateur suiveur GT_CLK de sorte que l'amplificateur suiveur retransmette le signal d'horloge extrait RF_CLK sur sa sortie RF_CLK_MSK si le signal de masquage est à « 1 » (donc si le signal sur RS_out est à « 0 ») et qu'il retransmette un signal constant au niveau bas « 0 » sur sa sortie RF_CLK_MSK si le signal de masquage est à « 0 » (donc si le signal sur RS_out est à « 1 »)

En d'autres termes, le signal de masquage MSK est adapté pour bloquer le signal d'horloge extrait RF_CLK_MSK à un niveau de référence constant.

On se réfère à la figure 6.

La figure 6 représente un détail des diagrammes G2 et G3 de la figure 2, le diagramme G41 représente le deuxième signal de commande synchronisé retro_latch, le digramme G42 représente la pulsation retro_latch_pulse, le diagramme G51 représente la sortie MF2_out du deuxième circuit de retard MF2 (en trait plein) et la tension aux bornes du deuxième élément capacitif C2 (en trait interrompu), le diagramme G52 représente le signal en sortie RS_out du verrou RS.

Ainsi, en référence avec les figures 5 et 6, lorsque que le signal de commande de modulation (retro_latch) est au niveau haut « 1 », la pulsation retro_latch_pulse initialise la sortie RS_out à « 1 ». L'utilisation d'une pulsation retro_latch_pulse à la place du signal retro_latch permet d'éviter un conflit sur les entrées d'initialisation et de réinitialisation du verrou RS.

D'une part, le signal de masquage MSK est à « 0 » et le signal d'horloge masqué RF_CLK_MSK est bloqué à « 0 », indépendamment du comportement du signal d'horloge extrait RF_CLK.

D'autre part, la sortie RS_out à « 1 » commande le mécanisme de chargement du deuxième élément capacitif C2, selon une pente de tension VC2. La durée t2 que prend la pente de tension VC2 pour atteindre la moitié du niveau haut « 1 » est configurée pour être supérieure à la durée du premier retard t1.

Après l'écoulement du deuxième retard t2, la sortie MF2_out du deuxième circuit de retard commute à « 1 » et réinitialise la sortie RS_out du verrou RS à « 0 ».

D'une part, la sortie MF2_out du circuit de retard MF2 commute immédiatement à « 0 ».

D'autre part, le signal de masquage MSK repasse à « 1 » et l'amplificateur suiveur GT_CLK retransmet le signal d'horloge RF_CLK sur sa sortie RF_CLK_MSK.

La différence entre le premier retard t1, qui détermine l'instant de transition à l'état non-modulé et la reprise de l'extraction du signal d'horloge, et le deuxième retard t2, qui détermine la fin du masquage du signal d'horloge RF_CLK_MSK, est choisi de façon à masquer le signal d'horloge extrait RF_CLK pendant le temps de stabilisation STB.

Le signal d'horloge masqué RF_CLK_MSK peut ainsi être utilisé sans risque pour cadencer les opérations du circuit de commande DIG_CNT (figure 4) après le deuxième retard t2.

En particulier, le circuit de commande DIG_CNT est configuré pour générer le signal de commande de modulation mod_dig qui commande la transition de l'état non-modulé à l'état modulé, à un instant défini par la mesure d'une durée sur les cycles d'horloges du signal d'horloge masqué RF_CLK_MSK.

En connaissance de la durée des retard t1 et t2, le comptage du nombre de cycles d'horloge est adapté pour compter la quantité restant après la différence t2-t1.

En résumé, les moyens de modulation MMOD comprennent avantageusement un deuxième circuit de retard MF2 configuré pour générer un deuxième retard t2 commençant à un instant coordonnée avec le commencement de la mesure du premier retard t1, à partir du signal de commande de modulation mod_dig, à l'origine de la commande de la transition à l'état modulé. Le circuit de commande DIG_CNT est configuré pour mesurer la durée restante, après le deuxième retard t2, de l'état non-modulé sur les cycles d'horloges du signal d'horloge masqué RF_CLK_MSK, issu du signal d'horloge extrait RF_CLK. Le circuit de commande DIG_CNT peut ainsi initier la prochaine commande des transitions de l'état non-modulé à l'état modulé par le signal de commande de modulation mod_dig de façon cohérente et précisément synchronisée avec le signal porteur AC0, AC1, malgré la perte de ce signal dans l'état modulé.

En outre, étant donné que la premier retard t1 et le deuxième retard t2 sont définis par les intensités des courants constants I1, I2 et par les valeurs capacitives du premier élément capacitif C1 et du deuxième élément capacitif C2, des modes de réalisation et de mise en œuvre peuvent prévoir une calibration des retards t1, t2, en fonction du signal d'horloge effectivement extrait.

Par exemple une telle calibration peut être faite avant la transmission des données, par exemple au démarrage (« boot ») du transpondeur CRD ou pendant le temps « emd » (pour « electromagnetic disturbances » en anglais) prévu avant la transmission des données du transpondeur par les normes usuelles de communication sans contact, pendant lequel le transpondeur doit présenter une impédance constante.

Des ajustements des intensités du premier courant I1 et du deuxième courant I2, ainsi que des valeurs capacitives du premier élément capacitif C1 et du deuxième élément capacitif C2, peuvent permettre de calibrer facilement et précisément les durées du premier retard t1 et du deuxième retard t2.

Les modes de réalisation et mise en œuvre décrit ci-avant permettent ainsi d'utiliser une impédance nulle à l'état modulé TX pour augmenter les performances du transpondeur, et donc augmenter la distance de communication. Cette amélioration est possible par un mécanisme utilisant des retards compensant le fait que le d'horloge n'est pas disponible à l'état modulé. Cela garantit la cohérence de la trame TX avec la fréquence de l'horloge de la porteuse RF.

## Revendications

1. Procédé de communication sans contact comprenant une retro-modulation d'un signal porteur (AC0, AC1) reçu aux bornes d'une antenne (Lc) dans une alternance d'états modulés et d'états non-modulés, dans lequel l'état non-modulé comprend une modulation à une impédance non-nulle d'une charge (LD, LDMOD) aux bornes de l'antenne (Lc), l'état modulé comprend une modulation à une impédance nulle ou quasi-nulle de la charge (LD, LDMOD) aux bornes de l'antenne (Lc), et les transitions de l'état modulé à l'état non-modulé sont commandées à un instant déterminé par un premier retard (t1).

2. Procédé selon la revendication 1, dans lequel les transitions de l'état non-modulé à l'état modulé sont commandées à un instant déterminé par une durée mesurée sur des cycles d'horloges issus d'un signal d'horloge (RF_CLK_MSK) extrait du signal porteur (AC0, AC1), la mesure de la durée commençant à partir d'un instant déterminé par un deuxième retard (t2), l'instant déterminé par le deuxième retard étant ultérieur à l'instant de la transition à l'état non-modulé.

3. Procédé selon la revendication 2, dans lequel la mesure du deuxième retard (t2) et la mesure du premier retard (t1) commencent à des instants coordonnés avec un signal de commande de modulation (mod_dig) initiant la commande de la transition à l'état modulé, le deuxième retard (t2) étant plus grand que le premier retard (t1).

4. Procédé selon l'une des revendications 2 ou 3, dans lequel un signal de masquage (MSK) bloquant le signal d'horloge extrait à un niveau de référence constant, est généré pendant la durée du deuxième retard (t2).

5. Procédé selon l'une des revendications 2 à 4, dans lequel le deuxième retard (t2) est obtenu par un temps de charge d'un deuxième élément capacitif (C2) avec un deuxième courant de référence (Igen2).

6. Procédé selon l'une des revendications précédentes, dans lequel la modulation de charge aux bornes de l'antenne (Lc) à une impédance nulle ou quasi-nulle de l'état modulé est commandée par un signal de rétro-modulation (retromod) généré pendant une durée déterminée par le premier retard (t1).

7. Procédé selon l'une des revendications précédentes, dans lequel le premier retard (t1) est obtenu par un temps de charge d'un premier élément capacitif (C1) avec un premier courant de référence (Igen1).

8. Transpondeur de communication sans contact comprenant une antenne (Lc) destinée à recevoir un signal porteur, et des moyens de modulation (MMOD) configurés pour rétro-moduler le signal porteur dans une alternance d'états modulés et d'états non-modulés, dans lequel les moyens de modulation (MMOD) comprennent un premier circuit de retard (MF1) configuré pour générer un premier retard (t1), et sont configurés pour moduler une charge (LD, LDMOD) aux bornes de l'antenne (Lc) à une impédance non-nulle dans l'état non-modulé, pour moduler la charge (LD, LDMOD) aux bornes de l'antenne (Lc) à une impédance nulle ou quasi-nulle dans l'état modulé, et pour commander les transitions de l'état modulé à l'état non-modulé à un instant déterminé par le premier retard (t1).

9. Transpondeur selon la revendication 8, comportant en outre un circuit d'extraction d'horloge (CLK_EXTR) configuré pour générer un signal d'horloge extrait (RF_CLK) du signal porteur, dans lequel les moyens de modulation (MMOD) comprennent un deuxième circuit de retard (MF2) configuré pour générer un deuxième retard (t2) et un circuit de commande (DIG_CNT) configuré pour mesurer une durée sur des cycles d'horloges issus du signal d'horloge extrait (RF_CLK_MSK) à partir d'un instant déterminé par le deuxième retard (t2), l'instant déterminé par le deuxième retard étant ultérieur à l'instant de la transition à l'état non-modulé, et pour générer un signal de commande de modulation (mod_dig) commandant les transitions de l'état non-modulé à l'état modulé à un instant déterminé par la durée mesurée.

10. Transpondeur selon la revendication 9, dans lequel le premier circuit de retard (MF1) et le deuxième circuit de retard (MF2) sont configurés pour commencer la mesure du premier retard (t1) et la mesure du deuxième retard (t2) à des instants coordonnés avec un signal de commande de modulation (mod_dig) généré des moyens de commande numérique (DIG_CNT) pour initier la commande de la transition à l'état modulé, le deuxième retard (t2) étant plus grand que le premier retard (t1).

11. Transpondeur selon l'une des revendications 9 ou 10, dans lequel le deuxième circuit de retard (MF2) est configuré pour générer un signal de masquage (MSK) adapté pour bloquer le signal d'horloge extrait (RF_CLK_MSK) à un niveau de référence constant, pendant la durée du deuxième retard (t2).

12. Transpondeur selon l'une des revendications 9 à 11, dans lequel le deuxième circuit de retard (MF2) comporte un deuxième élément capacitif (C2) et un deuxième générateur de courant (Igen2) adapté pour générer un deuxième courant de référence, adaptés pour obtenir le deuxième retard (t2) par le temps de charge du deuxième élément capacitif (C2) avec le deuxième courant de référence (Igen2).

13. Transpondeur selon l'une des revendications 8 à 12, dans lequel le premier circuit de retard (MF1) est configuré pour générer un signal de rétro-modulation (retromod) adapté pour commander la modulation de la charge aux bornes de l'antenne à une impédance nulle ou quasi-nulle à l'état modulé, pendant la durée du premier retard (t1).

14. Transpondeur selon l'une des revendications 8 à 13, dans lequel le premier circuit de retard (MF1) comporte un premier élément capacitif (C1) et un premier générateur de courant (Igen1) adapté pour générer un premier courant de référence, configurés pour obtenir le premier retard (t1) par le temps de charge du premier élément capacitif (C1) avec le premier courant de référence (Igen1).
